# EUROPÄISCHE PATENTSCHRIFT

(11) **EP 0 807 567 B1**
(45) Veröffentlichungstag und Bekanntmachung des Hinweises auf die Patenterteilung: **17.11.1999**
(21) Anmeldenummer: 97107619.5
(22) Anmeldetag: 09.05.1997
(51) Int. Cl.: B62D 55/275, B62D 55/21

(54) **Verbindergleiskette mit Laufpolster**
Linked track with track pad
Chenille accouplée avec tampon de roulement

(30) Priorität: 15.05.1996 DE 19619577
(43) Veröffentlichungstag der Anmeldung: 19.11.1997
(73) Patentinhaber: Diehl Remscheid GmbH & Co., D-42857 Remscheid (DE)
(72) Erfinder: Spies, Klaus, 42859 Remscheid (DE); Schlupp, Kurt, 42659 Solingen (DE); Neubert, Bernd, 42857 Remscheid (DE)
(74) Vertreter: Hofmann, Gerhard, Dipl.-Ing. Patentassessor

(56) Entgegenhaltungen:
- DE-A- 1 480 744
- US-A- 2 686 697

## Beschreibung

Die Erfindung bezieht sich auf eine Verbindergleiskette mit Laufpolster nach dem Oberbegriff des Anspruchs 1.

Aus der EP 0 255 071 B2 ist eine Verbindergleiskette mit Laufpolster bekannt, bei der ein Zahn eines Triebzahnrades in eine Öffnung eines Kettenkörpers eingreift. Das Laufpolster ist nach einer ersten Ausführung entsprechend der endseitig am Kettenkörper vorgesehenen Öffnung verkürzt ausgebildet, d. h., daß das Laufpolster stirnseitig in Höhe der Öffnung endet. Entsprechend einer zweiten Ausführung ist die Öffnung nicht endseitig am Kettenkörper sondern etwa in der Mitte des Rohrkörpers vorgesehen. Dabei ist im Laufpolster eine, dem Querschnitt der Öffnung entsprechender Ausschnitt vorgesehen.

Bei derartigen Gleisketten hat es sich gezeigt, daß die Lebensdauer der Laufpolster gegenüber der von Laufpolstern von Ketten entsprechend der DE-PS 16 05 509 deutlich geringer ist. Der Grund liegt in der kleineren Aufstandsfläche der Laufpolster.

Aufgabe der Erfindung ist es, eine Verbindergleiskette mit Laufpolstern vorzuschlagen, bei der das Laufpolster eine große Standzeit aufweist.

Die Erfindung löst diese Aufgabe entsprechend den kennzeichnenden Merkmalen des Anspruchs 1.

Vorteilhafte Weiterbildungen der Erfindung sind den abhängigen Ansprüchen zu entnehmen.

Durch die Vergrößerung der Aufstandsfläche wird das Laufpolster über die Öffnung des Rohrkörpers für den Eingriff des Triebkranzes verlängert. Die damit vorliegende geringere Flächenpressung im Gummi bewirkt einen geringeren Verschleiß durch geringen Abrieb. Eine Überhitzung von Laufpolstern wird selbst auf schnell laufenden Kettenfahrzeugen vermieden. Bei derartigen Kettenfahrzeugen liegen maximale Fahrgeschwindigkeiten bei 80 bis 90 km/h.

Ausführungsbeispiele der Erfindung sind in der Zeichnung dargestellt. Es zeigt:
- Fig. 1: einen Rohrkörper mit Laufpolster,
- Fig. 2: einen Schnitt II - II nach Fig. 1,
- Fig. 3: einen Schnitt III - III nach Fig. 1,
- Fig. 4: ein Grundblech des Laufpolsters nach den Fig. 1 bis 3 und
- Fig. 5 - 8: Variationen von Laufpolstern und Rohrkörpern zu Fig. 1.

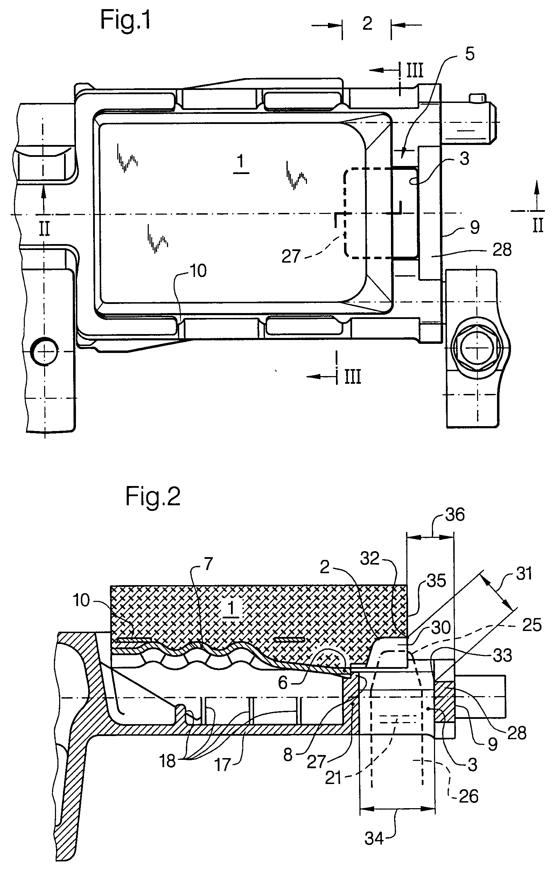

Nach Fig. 1 erstreckt sich ein einschiebbares Laufpolster 1 zu einem Teilabschnitt 2 über eine Öffnung 3 eines Rohrkörpers 5.

Das Laufpolster 1 ist im Rohrkörper 5 über eine federnde Zunge 6 eines Grundbleches 7 durch einen Nocken 8 arretiert. Das Grundblech 7 ist mit dem Laufpolster 1 durch Vulkanisation verbunden. Weiterhin weist das Laufpolster 1 ein vulkanisiertes Zwischenblech 10 auf.

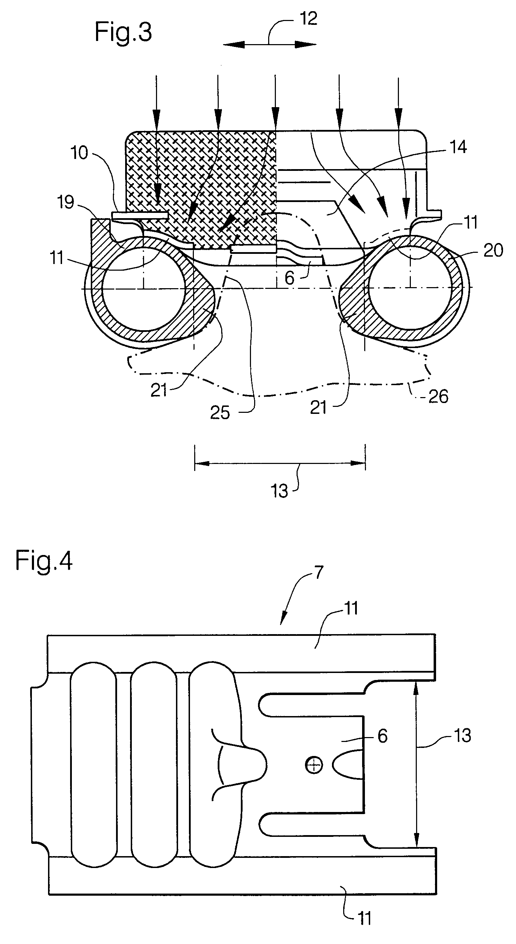

Der Rohrkörper 5 besteht nach den Fig. 1 bis 3 aus zwei, über eine Platte 17 mit Querrippen 18 verbundenen Rohren 19, 20.

Die Öffnung 3 für einen Eingriff des Zahnes 25 eines Triebkranzes 26 ist durch die Rohre 19, 20 mit Antriebsnocken 21 und durch Stege 27, 28 begrenzt. Das Grundblech 7 besitzt zwei Schenkel 11, die das Laufpolster 1 auf den Rohren 19, 20 abstützen.

Am Laufpolster 1 ist im Bereich der Öffnung 3 eine Aussparung 30 für den Freigang des Zahnes 25 des Triebkranzes 26 vorgesehen. Diese Aussparung 30 ermöglicht die Selbstreinigung der Öffnung 3. Das Laufpolster 1 liegt mit seiner Stirnfläche 35 in einem Abstand 36 von einer Stirnfläche 9 des Rohrkörpers 5, sodaß etwa 2/3 der Öffnung 3 bedeckt sind.

Die Aussparung 30 hat in Laufrichtung 12 eine Basisweite 13, die sich zwischen den beiden Schenkeln 11 erstreckt. Die Aussparung 30 weist eine Trapezform 14 auf.

Ein Durchlaß 31 zwischen einer Kante 32 am Laufpolster 1 und einer Kante 33 an dem Steg 28 ist etwa so groß, wie die Öffnungsweite 34 der Öffnung 3.

Wird der Durchlaß 31 kleiner ausgeführt, als die Öffnungsweite 34, so kann das Laufpolster Gummi im Bereich der Kante 32 durch elastische Verformung ausweichen, wenn ein störender Gegenstand, wie ein Stein, vom Zahn 25 des Triebkranzes 26 durch die Öffnung 3 des Rohrkörpers 5 gedrückt wird.

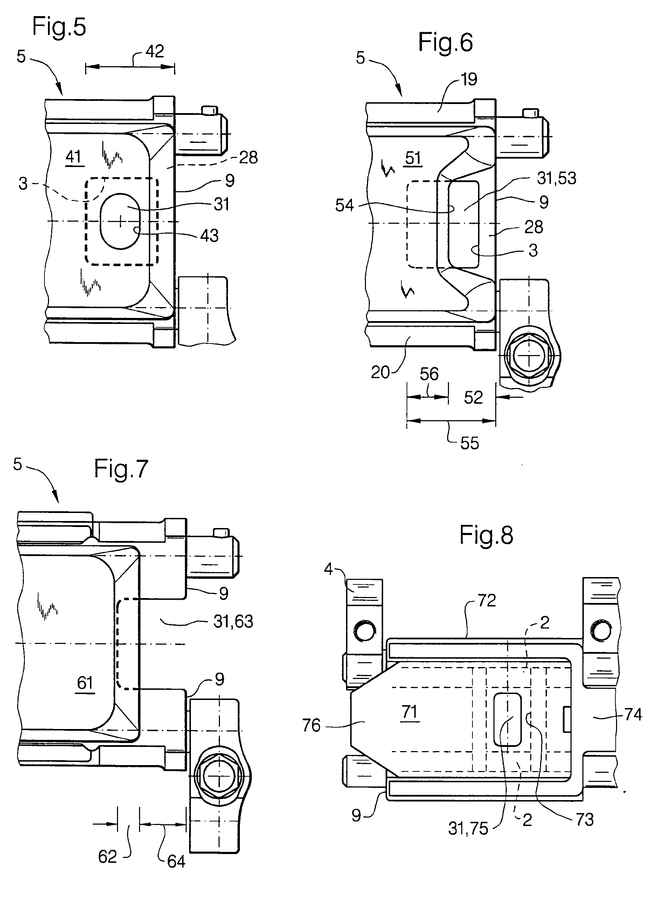

Nach Fig. 5 erstreckt sich ein Laufpolster 41 mit einem Teilabschnitt 42 vollständig über die Öffnung 3 und zwar bis zur Stirnfläche 9 am Steg 28. Für die Selbstreinigung der Öffnung 3 weist das Laufpolster 41 eine durchgehende Ausnehmung 43 als Durchlaß 31 auf.

Nach Fig. 6 erstreckt sich ein Laufpolster 51 entsprechend einem Teilabschnitt 55 nur im Bereich der Rohre 19, 20 bis zur Stirnfläche 9 des Steges 28. Ein Mittelabschnitt 56 des Laufpolsters 51 ist um einen Abstand 52 so zurückversetzt, daß für die Selbstreinigung ein ausreichender Durchlaß 31 bzw. Öffnungsquerschnitt 53 vorliegt. Dieser Öffnungsquerschnitt 53 wird einerseits durch die Öffnung 3 und andererseits durch die zurückversetzte Fläche 54 des Laufpolsters 51 begrenzt.

Nach Fig. 7 wird eine gute Selbstreinigung durch Weglassen des Steges 28 erreicht. Dadurch liegt eine U-förmige Öffnung 63 vor zur Bildung eines Durchlasses 31. Ein Laufpolster 61 überdeckt entsprechend einem Abstand 62 die Öffnung 63 und weist zur Stirnfläche 9 einen Abstand 64 auf. Das Laufpolster kann auch bis zur Stirnfläche 9 des Rohrkörpers 5 reichen.

Nach Fig. 8 erstreckt sich ein Laufpolster 71 über einen Rohrkörper 72 hinaus bis zwischen die Verbinder 4. Eine Öffnung 73 liegt nahe einer Mittelplatte 74 des Rohrkörpers 72. Ein Durchbruch 75 im Laufpolster 71 bildet den Durchlaß 31. Durch querschnittsmäßige Verkleinerung eines Durchbruchs 75 gegenüber der Öffnung 73 ist die tragende Laufpolsterfläche 76 vergrößert.

## Patentansprüche

1. Verbindergleiskette mit Laufpolster (1), deren Rohrkörper (5) wenigstens eine Öffnung (3) für den Eingriff eines Zahnes (25) eines Triebkranzes (26) aufweist
und deren Rohrkörper (5) fahrbahnseitig mit demontierbaren Laufpolstern (1) versehen sind,
wobei die aus elastischem, abriebfestem Werkstoff bestehenden Laufpolster (1) durch wenigstens ein Blech (7, 10) verstärkt sind,
dadurch gekennzeichnet,
daß das Laufpolster (1) in Richtung auf die Öffnung (3) verlängert ist und wenigstens einen Teilabschnitt (2) des Flächenbereichs der Öffnung (3) abdeckt.

2. Verbindergleiskette nach Anspruch 1,
dadurch gekennzeichnet,
daß das Laufpolster (1) etwa 30 bis 100% des Flächenbereichs der Öffnung (3) überragt bzw. bedeckt.

3. Verbindergleiskette nach Anspruch 1,
dadurch gekennzeichnet,
daß das Laufpolster für den Freigang des Zahnes (25) des Triebkranzes (26) an seiner Unterseite eine Aussparung (30) aufweist.

4. Verbindergleiskette nach Anspruch 1,
dadurch gekennzeichnet,
daß das Laufpolster (1) sich bis zur freien Stirnfläche (9) des Rohrkörpers (5) erstreckt.

5. Verbindergleiskette nach Anspruch 1,
dadurch gekennzeichnet,
daß das Laufpolster (1) eine durchgehende Ausnehmung (43) für die Schmutzabfuhr aufweist,
und die Ausnehmung (43) mit der Öffnung (3) korrespondiert.

6. Verbindergleiskette nach Anspruch 1,
dadurch gekennzeichnet,
daß das Laufpolster (1, 51, 61) in einem Abstand (36, 52, 64) von der freien Stirnfläche (9) des Rohrkörpers (5) endet und einen Durchlaß (31) für die Schmutzabfuhr bildet.

7. Verbindergleiskette nach Anspruch 1,
dadurch gekennzeichnet,
daß auch der verlängerte Teilabschnitt (2, 42, 55, 62) des Laufpolsters (1, 41, 51, 61) durch Schenkel (11) eines Grundblechs (7) verstärkt ist.

## Claims

1. Connector caterpillar track with tread pads (1), its tubular elements (5) having at least one opening (3) for the engagement of a sprocket (25) of a scroll gear (26) and its tubular elements (5) being provided on the road side with removable tread pads (1),
the tread pads (1), made of elastic, abrasion-resistant material, being strengthened by at least one plate (7, 10),
characterized in that
the tread pad (1) is extended in direction of the opening (3) and covers at least a portion (2) of the surface area of the opening (3).

2. Connector caterpillar track according to Claim 1,
characterized in that
the tread pad (1) overlaps or covers approximately 30 to 100% of the surface area of the opening (3).

3. Connector caterpillar track according to Claim 1,
characterized in that
the tread pad has a recess (30) on its underside for free movement of the sprocket (25) of the scroll gear (26).

4. Connector caterpillar track according to Claim 1,
characterized in that
the tread pad (1) extends as far as the free end face (9) of the tubular element (5).

5. Connector caterpillar track according to Claim 1,
characterized in that
the tread pad (1) has a through opening (43) for removal of mud,
and the opening (43) corresponds with the opening (3).

6. Connector caterpillar track according to Claim 1,
characterized in that
the tread pad (1, 51, 61) ends at a distance (36, 52, 64) from the free end face (9) of the tubular element (5) and forms a passage (31) for removal of mud.

7. Connector caterpillar track according to Claim 1,
characterized in that
the extended portion (2, 42, 55, 62) of the tread pad (1, 41, 51, 61) is also strengthened by flanges (11) of a base plate (7).

## Revendications

1. Chenille à raccords comportant un coussin de roulement (1) dont le corps tubulaire (5) présente au moins une ouverture (3) pour l'engagement d'une dent (25) d'une couronne dentée d'entraînement (26) et dont les corps tubulaires (5) sont pourvus côté chaussée de coussins de roulement (1) démontables, les coussins de roulement (1) en matériau élastique et résistants à l'usure par friction, étant renforcés par au moins une tôle (7, 10), caractérisée en ce que le coussin de roulement (1) est prolongé dans la direction de l'ouverture (3) et recouvre au moins une partie (2) de la zone de surface de l'ouverture (3).

2. Chenille à raccords selon la revendication 1, caractérisée en ce que le coussin de roulement (1) dépasse de la zone de surface de l'ouverture (3) ou la recouvre d'environ 30 à 100%.

3. Chenille à raccords selon la revendication 1, caractérisée en ce que le coussin de roulement présente une découpe (30) sur sa face inférieure, pour le libre passage de la dent (25) de la couronne dentée d'entraînement (26).

4. Chenille à raccords selon la revendication 1, caractérisée en ce que le coussin de roulement (1) s'étend jusqu'à la face frontale (9) libre du corps tubulaire (5).

5. Chenille à raccords selon la revendication 1, caractérisée en ce que le coussin de roulement (1) présente un évidement (43) traversant pour l'évacuation des impuretés et l'évidement (43) correspond à l'ouverture (3).

6. Chenille à raccords selon la revendication 1, caractérisée en ce que le coussin de roulement (1, 51, 61) se termine à une distance (36, 52, 64) de la face frontale (9) libre du corps tubulaire (5) et forme un passage (31) pour l'évacuation des impuretés.

7. Chenille à raccords selon la revendication 1, caractérisée en ce que la partie prolongée (2, 42, 55, 62) du coussin de roulement (1, 41, 51, 61) est renforcée aussi par des côtés (11) d'une tôle de base (7).
